# EUROPÄISCHE PATENTANMELDUNG

(11) **EP 0 565 136 A2**
(43) Veröffentlichungstag der Anmeldung: **13.10.1993**
(21) Anmeldenummer: 93109340.5
(22) Anmeldetag: 26.07.1989
(51) Int. Cl.: F16L 55/033, F16L 55/027, B60T 17/00, F01N 1/08, B25D 17/11, F04D 29/66, F01N 3/02

(54) **Druckluft-Entlüftungseinrichtung**

(30) Priorität: 21.09.1988 DE 3832029
(62) Teilanmeldung aus: 89113750.7
(71) Anmelder: WABCO GmbH, D-30453 Hannover (DE)
(72) Erfinder: Deike, Karl-Heinz, D-3017 Pattensen 5 (DE); Lippelt, Frank-Dietmar, D-3013 Barsinghausen 1 (DE); Kiel, Bernd-Joachim, D-3050 Wunstorf 1 (DE); Pohl, Wolfgang, D-3008 Garbsen 6 (DE); König, Heinz-Werner, D-3013 Barsinghausen 8 (DE)
(74) Vertreter: Schrödter, Manfred, Dipl.-Ing.

(57) **Zusammenfassung**

Es wird eine Druckluft-Entlüftungseinrichtung mit geräuschdämpfenden Mitteln (15) und einem den geräuschdämpfenden Mitteln (15) vorgeschalteten zu entlüftenden Entlüftungsraum 82, 19) vorgeschlagen.

Um zu verhindern, daß bei Entstehen von übermäßig hohem Staudruck im Entlüftungsraum (2, 19) Schäden an der Entlüftungseinrichtung oder an Geräten, die der Entlüftungseinrichtung vorgeschaltet sind, entstehen, ist zwischen dem den geräuschdämpfenden Mitteln (15) vorgeschalteten Entlüftungsraum (19) und dem den geräuschdämpfenden Mitteln (15) nachgeschalteten Entspannungsraum (14) ein Bypaß-Kanal (20) angeordnet, über welchen diese beiden Räume (19, 14) ständig miteinander verbunden sind.

## Beschreibung

Die Erfindung betrifft eine Druckluft-Entlüftungseinrichtung gemäß dem Oberbegriff des Patentanspruchs 1.

Eine derartige Druckluft-Entlüftungseinrichtung ist aus der EP 0 019 855 bekannt.

Bei einer Druckluft-Entlüftungseinrichtung ist es nicht auszuschließen, daß nach längerer Betriebszeit die Druckluft-Durchlässigkeit der geräuschdämpfenden Mittel im Gehäuseinnenraum der Druckluft-Entlüftungseinrichtung nachläßt, z.B. durch gefrierendes Kondensat oder durch Ablagerung von Ölkohle.
Dies kann zur Folge haben, daß sich im Gehäuseinnenraum ein unerwünschter Staudruck bildet.

Der Erfindung liegt deshalb die Aufgabe zugrunde, eine Druckluft-Entlüftungseinrichtung der eingangs erwähnten Art so auszubilden, daß eine übermäßige Staudruckbildung verhindert wird.

Diese Aufgabe wird durch die im Patentanspruch 1 angegebene Erfindung gelöst.
Weiterbildungen und vorteilhafte Ausgestaltungen der Erfindung sind in den Unteransprüchen aufgezeigt.

Die Erfindung bietet insbesondere den Vorteil, daß durch die Anordnung eines Bypaß-Kanals zwischen dem den geräuschdämpfenden Mitteln vorgeschalteten Entlüftungsraum und dem den geräuschdämpfenden Mitteln nachgeschalteten Entspannungsraum, über welchen diese beiden Räume ständig miteinander verbunden sind, eine nennenswerte Beeinträchtigung der Funktion der der Druckluft-Entlüftungseinrichtung vorgeschalteten Geräte oder gar eine Zerstörung dieser Geräte vermieden wird.

Dadurch, daß zwischen den beiden besagten Räumen ein Bypaß-Kanal angeordnet ist, bleibt die Druckluft-Entlüftungseinrichtung auch dann noch funktionsfähig, wenn die geräuschdämpfenden Mittel teilweise zugesetzt sind.

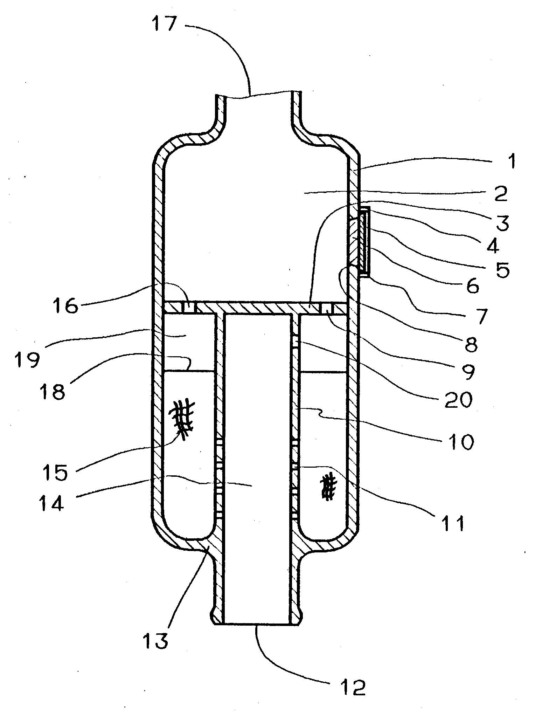

Anhand der Zeichnung wird nachfolgend ein Ausführungsbeispiel der Erfindung näher erläutert.

Die Zeichnung zeigt einen Geräuschdämpfer mit einer Einlaßkammer, einer Expansionskammer und einer Auslaßkammer, wobei ein die Expansionskammer und die Auslaßkammer verbindender Bypaß und ein in der die Einlaßkammer begrenzenden Wand des Gehäuses vorgesehenes Überdruckventil vorgesehen sind.

Der in der Zeichnung dargestellte Geräuschdämpfer weist ein Gehäuse (1) mit einer Einlaßöffnung (17) und einer Auslaßöffnung (12) für Druckluft auf.
Im Gehäuse (1) des Geräuschdämpfers sind geräuschdämpfende Mittel vorgesehen, welche den Innenraum des Gehäuses (1) in einen den geräuschdämpfenden Mitteln vorgeschalteten Entlüftungsraum und einen den geräuschdämpfenden Mitteln nachgeschalteten Entspannungsraum unterteilen.

Die geräuschdämpfenden Mittel bestehen aus einem ringförmig ausgebildeten Drahtgewebekörper (15), der ein in Richtung der Längsachse des Gehäuses (1) verlaufendes Rohr (10) umgibt. Die Wand des Rohres (10) ist in dem vom Drahtgewebekörper (15) umgebenen Bereich mit einer Vielzahl von Durchlässen (11) versehen.

Das Rohr (10) ist mit seinem einen Ende an einer Platte (3) druckdicht befestigt, die in dem den geräuschdämpfenden Mitteln vorgeschalteten Entlüftungsraum quer zur Längsachse des Gehäuses (1) verlaufend an der Gehäuseinnenwand befestigt ist.
Die Platte (3) unterteilt den den geräuschdämpfenden Mitteln vorgeschalteten Entlüftungsraum in eine mit der Einlaßöffnung (17) verbundene Einlaßkammer (2) und eine Expansionskammer (19). Die Einlaßkammer (2) ist über in der Platte (3) vorgesehene Durchlässe (9, 16) ständig mit der Expansionskammer (19) verbunden.

Die Expansionskammer (19) wird von der der Platte (3) zugewandten Stirnfläche (18) des Drahtgewebekörpers (15), einer Ringfläche der Platte (3), der Innenwand des Gehäuses (1) und dem nicht vom Drahtgewebekörper (15) umgebenen Bereich des Rohres (10) begrenzt.

Das Rohr (10) mündet mit seinem der Platte (3) abgewandten Ende, die im Bodenteil (13) des Gehäuses (1) vorgesehene Auslaßöffnung (12) umgebend, am Bodenteil (13).
Der von der Innenwand des Rohres (10) begrenzte Raum ist der den geräuschdämpfenden Mitteln nachgeschaltete Entspanungsraum und dient als Auslaßkammer (14) für die Druckluft.

In dem die Einlaßkammer (2) begrenzenden Bereich der Wand des Gehäuses (1) ist eine Durchlaßöffnung (8) angeordnet, die von einem in diese eingesetzten, als Verschlußglied (6) dienenden Stopfen verschlossen wird. Die Durchlaßöffnung (8) und das Verschlußglied (6) sind vorzugsweise in Richtung auf die Einlaßkammer (2) zu sich konisch verjüngend ausgebildet.

Eine auf der äußeren Mantelfläche des Gehäuses (1) aufliegende und die Durchlaßöffnung (8) überdeckende Platte (5) aus einem elastischen Werkstoff hält das Verschlußglied (6) in der Durchlaßöffnung (8). Die Platte (5) wird von zwei rahmenartigen Teilen (4 und 7), die an die Mantelfläche des Gehäuses (1) angeformt sind, gehalten.

In dem Bereich des Rohres (10), welches nicht von dem Drahtgewebekörper (15) umgeben ist, ist nahe der Platte (3) eine als Bypaß-Kanal ausgebildete Öffnung (20) angeordnet. Die Öffnung (20) weist vorzugsweise eine Drosselstelle auf. Über die Öffnung (20) ist die Expansionskammer (19) ständig mit der Auslaßkammer (14) verbunden.

Die Funktion des Geräuschdämpfers wird nachfolgend näher erläutert.

Die in die Einlaßkammer (2) einströmende Druckluft gelangt durch die in der Platte (3) vorgesehenen Durchlässe (9, 16) in die Expansionskammer (19). In der Expansionskammer (19) entspannt sich die Druckluft weitestgehend und gelangt einerseits durch den Drahtgewebekörper (15) und die im Rohr (10) vorgesehenen Durchlässe (11) in die Auslaßkammer (14) und andererseits durch den Bypaß-Kanal (20) direkt von der Expansionskammer (19) in die Auslaßkammer (14). Aus der Auslaßkammer (14) wird die Druckluft durch die Auslaßöffnung (12) zur Atmosphäre hin abgeführt.

Setzt sich der Drahtgewebekörper durch gefrierendes Kondensat teilweise zu, so bleibt der Geräuschdämpfer weiterhin funktionsfähig, da sich der in der Expansionskammer (19) langsam aufbauende Staudruck über den Bypaß-Kanal (20) und die Auslaßkammer (14) zur Atmosphäre hin abbaut.

Setzt sich, bedingt durch widrige Umstände auch der Bypaß-Kanal (20) zu, so daß der Staudruck in der Expansionskammer (19) und auch in der Einlaßkammer (2) eine maximal zulässige Höhe überschreitet, so wird das Verschlußglied (6) vom Staudruck aus der Durchlaßöffnung (8) in der Wand des Gehäuses (1) herausgedrückt und verformt dabei die elastische Platte (5) in Richtung von der äußeren Mantelfläche des Gehäuses (1) weg. Bei diesem Vorgang wird auch die Platte (6) aus ihren rahmenartigen Halteteilen (4, 7) herausgedrückt.

In gleicher Weise arbeitet die in der Wand des Gehäuses (1) vorgesehene Überdrucksicherungseinrichtung (8, 5, 6, 4, 7) auch, wenn die Platte (3) als Lochblech ausgebildet ist und sich die Öffnungen des Lochbleches zusetzen, so daß in der Einlaßkammer (2) ein zu hoher Staudruck entsteht.

Als zu entlüftender Entlüftungsraum ist jeder Raum, wie z.B. die Expansionskammer, die Einlaßkammer, der Einlaßstutzen anzusehen. D.h. jeder Raum, der den geräuschdämpfenden Mitteln vorgeschaltet ist, hat die Funktion eines Entlüftungsraumes, und zwar unabhängig davon, ob er in einem Gehäuse, wie im Ausführungsbeispiel der Erfindung dargestellt, oder in einem Teil eines Gerätes gelegen ist, in oder an welchem die geräuschdämpfenden Mittel angeordnet sind.

Ist ein den geräuschdämpfenden Mitteln nachgeschalteter Entspannungsraum vorgesehen, so kann dieser auch direkt von der diesem Entspannungsraum zugewandten Seite der geräuschdämpfenden Mittel begrenzt werden. Eine Wand, wie in dem Ausführungsbeispiel dargestellt, die Wand des Rohres (10), ist nicht erforderlich.
Der Bypaß-Kanal kann als ein die geräuschdämpfenden Mittel durchdringender Kanal ausgebildet sein. Ein solcher Kanal kann ein Überdruckventil enthalten (den Kanaldurchlaßquerschnitt verschließende Wand mit Sollbruchstelle oder Rückschlagklappe).

## Patentansprüche

1. Druckluft-Entlüftungseinrichtung mit folgenden Merkmalen:
a) Es sind geräuschdämpfende Mittel (15) vorgesehen;
b) es ist ein den geräuschdämpfenden Mitteln (15) vorgeschalteter zu entlüftender Entlüftungsraum (2, 19) vorgesehen;
dadurch gekennzeichnet, daß der Entlüftungsraum (2, 19) ständig über einen Bypaß-Kanal (20) mit einem den geräuschdämpfenden Mitteln (15) nachgeschalteten Entspannungsraum (14) verbunden ist.

2. Druckluft-Entlüftungseinrichtung nach Anspruch 1, gekennzeichnet durch die folgenden Merkmale:
a) Die geräuschdämpfenden Mittel (15) sind in einem Gehäuse (1) angeordnet;
b) den geräuschdämpfenden Mitteln (15) ist ein zu entlüftender Entlüftungsraum (2, 19) vorgeschaltet.

3. Druckluft-Entlüftungseinrichtung nach wenigstens einem der vorhergehenden Ansprüche, gekennzeichnet durch die folgenden Merkmale:
a) Die geräuschdämpfenden Mittel (15) sind in einem Gehäuse (1) angeordnet;
b) den geräuschdämpfenden Mitteln (15) ist ein zu entlüftender Entlüftungsraum (2, 19) vorgeschaltet;
c) den geräuschdämpfenden Mitteln ist ein Entspannungsraum (14) nachgeschaltet.

4. Druckluft-Entlüftungseinrichtung nach wenigstens einem der vorhergehenden Ansprüche, dadurch gekennzeichnet, daß der Entlüftungsraum (2, 19) durch eine Wand (3) in eine Einlaßkammer (2) und in eine Expansionskammer (19) unterteilt ist, wobei die Einlaßkammer (2) und die Expansionskammer (19) über wenigstens eine in der Wand (3) vorgesehene Öffnung (9, 16) miteinander verbunden sind.

5. Druckluft-Entlüftungseinrichtung nach Anspruch 4, dadurch gekennzeichnet, daß die Expansionskammer (19) und der Entspannungsraum (14) über den Bypaß-Kanal (20) miteinander verbunden sind.
